# EUROPÄISCHE PATENTSCHRIFT

(11) **EP 1 031 445 B1**
(45) Veröffentlichungstag und Bekanntmachung des Hinweises auf die Patenterteilung: **14.09.2005**
(21) Anmeldenummer: 99810166.1
(22) Anmeldetag: 26.02.1999
(51) Int. Cl.: B60H 1/00

(54) **Fahrzeug mit Klimakanal und Beleuchtungseinrichtung**
Vehicle with air conditioning duct and lighting device
Véhicule avec un conduit de climatisation et un dispositif d'éclairage

(43) Veröffentlichungstag der Anmeldung: 30.08.2000
(73) Patentinhaber: Alcan Technology & Management AG, 8212 Neuhausen am Rheinfall (CH)
(72) Erfinder: Wieschermann, Jochen, 88682 Salem (DE); Rysavy, Peter, 8004 Zürich (CH)

(56) Entgegenhaltungen:
- WO-A-86/02138
- FR-A- 538 837
- US-A- 2 526 828
- US-A- 4 387 415
- US-A- 5 752 760

## Beschreibung

Die Erfindung betrifft ein Fahrzeug nach dem Oberbegriff von Anspruch 1.

Fahrzeuge der vorstehend genannten Art sind beispielsweise Schienen-, Magnetschwebebahn- oder Strassenfahrzeuge, insbesondere Eisenbahnwagen, mit einem als Fahrgastraum gestalteten Abteil.

Bei bekannten Fahrzeugen mit Klimaanlage verläuft an der Decke des Abteils oder an der Seitenwand in Fahrzeuglängsrichtung wenigstens ein Klimakanal zur Zufuhr von Frischluft oder Wegführung von Abluft in den bzw. aus dem Fahrgastraum. Die Beleuchtungseinrichtung besteht beispielsweise aus neben dem Klimakanal angeordneten durchgehenden Leuchtbändern mit hinter den Leuchtbändern angeordneten Leuchtkörpern. Bei einer anderen bekannten Beleuchtungseinrichtung erfolgt die Beleuchtung indirekt, d.h. die Leuchtkörper sind beispielsweise durch Wand- oder Deckenteile teilweise abgedeckt.

Ein Nachteil der vorbekannten getrennten Anordnung von Beleuchtungseinrichtung und Klimakanal liegt darin, dass diese getrennte Anordnung viel Platz beansprucht und der getrennte Einbau entsprechend arbeitsaufwendig ist.

Fahrzeuge des eingang genannten Art sind aus WO-A-86/02138, US-A-2 526 828, US-A-5 752 760 und US-A-4 387 415 bekannt.

Der Erfindung liegt die Aufgabe zugrunde, den Klimakanal und die Beleuchtungseinrichtung bei einem Fahrzeug der eingangs genannten Art so anzuordnen, dass ein möglichst geringes Einbauvolumen beansprucht wird und ein einfacher Einbau, auch von vorgefertigten Elementen, erfolgen kann.

Zur erfindungsgemässen Lösung der Aufgabe führt ein Fahrzeug mit den Merkmalen von Anspruch 1.

Mit dieser erfindungsgemässen, in den Klimakanal integrierten Beleuchtung ergibt sich ein gegenüber dem Stand der Technik geringeres Einbauvolumen. Der erfindungsgemässe Klimakanal kann einzelne Leuchten, Leuchtbänder, Luftkanäle, Luftauslassöffnungen, Luftabsaugöffnungen, Ventilatoren, Isolationen, Kabel, Kabelkanäle, Reflektoren für die Leuchtkörper, Brandmelder, Brandbekämpfungsanlagen, Träger, Lautsprecher, Hinweise und Verkleidungen beinhalten.

Der Klimakanal kann in Längs- oder Querrichtung durch quer- oder längslaufende Trennwände in wenigstens zwei längs- oder querlaufende Teilkanäle aufgeteilt sein. Damit lassen sich die Leuchtkörper einzeln oder in Gruppen voneinander brandtechnisch abtrennen. Die Trennwände bestehen bevorzugt aus Glas, aus Metall oder aus einem schwer entflammbaren Kunststoff, insbesondere aus Polycarbonat. Die Teilkanäle können zur getrennten Führung von Frisch- und Abluft eingesetzt werden.

Der Klimakanal kann beispielsweise aus einem einzigen Teil gebogen oder in einer Form laminiert werden. Er kann aber auch aus zwei oder mehr Teilen bestehen, welche mittels lösbaren oder unlösbaren Verbindungen oder einer Kombination beliebiger Verbindungsarten zusammengefügt werden.

Bei einer zweckmässigen Ausgestaltung des Klimakanals weist der Kanalboden beidseitig angeordnete, aus zumindest teilweise lichtdurchlässigem Material bestehende, längslaufende Platten auf, wobei die Platten vorzugsweise aus Glas oder aus einem schwer entflammbaren Kunststoff, insbesondere aus Polycarbonat bestehen. Zwischen den seitlich verlaufenden Platten kann mittig ein weiterer, zumindest teilweise lichtdurchlässiger längslaufender Bodenteil des Klimakanals mit Luftauslass- oder Luftabsaugöffnungen angeordnet sein. Die Luftauslässe können aber auch seitlich und der Lichtdurchlass mittig angeordnet sein.

Der mittige Bodenteil des Klimakanals ist bevorzugt eine Platte aus einem mindestens teilweise lichtdurchlässigen Material, vorzugsweise eine Kunststoffplatte, insbesondere eine Platte aus Polycarbonat, oder ein Blech, insbesondere ein Aluminiumblech, mit Durchbrüchen bzw. Aussparungen und kann mit einer die Durchbrüche im Blech abdeckenden, die Luftauslass- oder Luftabsaugöffnungen aufweisenden Kunststoffplatte oder -folie verbunden sein.

Durch die Aussparungen bzw. die Luftauslass- oder Luftabsaugöffnungen in der Kunststoffplatte oder -folie kann Frischluft eingeblasen und/oder Abluft bzw. Umluft abgesaugt werden. Im Brandfall kann durch diese Öffnungen eine aktive Rauchabsaugung erfolgen, oder brandbekämpfende Stoffe in das Abteil eingebracht werden. Die Anordnung der Aussparungen bzw. der Öffnungen kann über eine Einheit oder über die gesamte Deckenlänge variieren. Dadurch kann der Lufteinlass und/oder der Luftauslass gesteuert werden. Die Aussparungen im lichtundurchlässigen Material können zum Teil oder ganz mit einem lichtdurchlässigen Material abgedeckt werden, so dass die freie Aus- und Eintrittsfläche der Luft den speziellen Bedürfnissen angepasst werden kann. Durch die Anzahl und die Dimensionierung der einzelnen Löcher kann die gewünschte Strömung erzielt werden.

Die Beleuchtung kann in der Art und Weise erfolgen, dass das Licht einer oder mehrerer Lichtquellen bzw. Leuchtkörper direkt und/oder indirekt durch die teilweise lichtdurchlässigen Platten und/oder die Aussparungen im lichtundurchlässigen Material tritt.

Anstelle von Aussparungen können lichtundurchlässige Bereiche in den an sich lichtdurchlässigen Materialien auch durch entsprechend lichtundurchlässige Aufdrucke erzeugt werden. Durch die Aussparungen oder die Aufdrucke kann beispielsweise die allgemeine Laufrichtung im Abteil bzw. die Fluchtrichtung angezeigt werden. Durch das Bedrucken lichtdurchlässiger Materialien mit mehr oder weniger lichtundurchlässigen Farben können beispielsweise auch Reklameschriften- oder bilder erzeugt werden.

Die Beleuchtung kann auch so erfolgen, dass eine oder mehrere Lichtquellen ein oder mehrere lichtleitende Materialien speisen und das Licht von diesen an den Lichtaustrittspunkt transportiert wird.

Der Klimakanal kann so eingebaut werden, dass die Zugänglichkeit zu den Leuchtkörpern von ausser- oder innerhalb des Klimakanals gewährleistet ist.

Kabel und/oder Kabelkanäle können durch entsprechende Aufnahmen an der Innen- oder Aussenseite des Klimakanals befestigt oder aufgelegt sein.

Die Reflektoren der Leuchtkörper können als separate Teile ausgeführt sein. Die Funktion der Reflektoren kann jedoch auch durch geeignete Formgebung und/oder Oberflächenwahl der Innenseite des Klimakanals durch den Klimakanal selbst übernommen werden.

Innerhalb oder ausserhalb des Klimakanals können Brandmelder und/oder Temperaturfühler angeordnet sein. Werden diese Sensoren innerhalb des Klimakanals montiert, verbessert die Luftumspülung die Funktion, wobei insbesondere die Reaktionszeiten verkleinert werden.

Die Brandmelder können beispielsweise auch die Luft und/oder den Verschmutzungsgrad im Klimakanal detektieren.

Eine Brandbekämpfungsanlage kann innerhalb oder ausserhalb des Klimakanals angeordnet sein.

Lautsprecher können innerhalb oder ausserhalb des Klimakanals befestigt werden und so den Klimakanal als Resonanzkasten ausnützen.

Der Klimakanal kann starr oder mittels elastischer Verbindungen entkoppelt an der Decken- oder Seitenwandstruktur befestigt sein.

Die Wände des Klimakanals können thermisch und/oder akustisch isoliert sein. Diese Isolation kann auf den dem Fahrgastraum abgewandten Wänden des Klimakanals auf der Innen- und/oder Aussenseite appliziert und/oder befestigt sein. Auf den zumindest teilweise lichtdurchlässigen Teilen kann eine transparente Isolation auf der Aussen- oder Innenseite des Klimakanals aufgetragen oder befestigt sein. Durch entsprechende Materialwahl und/oder Materialkombination können die Isolationseigenschaften auch direkt von den Wänden des Klimakanals übernommen werden, beispielsweise durch die Verwendung von Verbundmaterialien wie z.B. Aluminium-Kunststoff-Aluminium-Sandwichplatten.

Bei einer zweckmässigen Ausführungsform der Erfindung umfasst der Klimakanal einzelne vormontierte Einheiten. Durch den Einbau einer oder mehrerer solcher Einheiten wird eine beliebige Länge erreicht. Um aufwendige Reparaturen durchzuführen, können wiederum einzelne Einheiten demontiert oder ersetzt werden.

Die vormontierten Einheiten können starr oder mittels elastischer Verbindungen entkoppelt zueinander montiert sein. Als Befestigungsart kann eine lösbare Verbindung zweckmässig sein. Als lösbare Verbindungen kommen insbesondere Schrauben, Schnellverschlüsse, Klettverschlüsse, Schnappverschlüsse und Formschluss in Frage. Als unlösbare Verbindungen eignen sich beispielsweise Nieten, Schweissen und Kleben. Selbstverständlich ist auch eine Kombination beliebiger Befestigungsarten möglich.

Bei einer starren Montage lässt sich der optische Versatz auf ein Minimum reduzieren. Bei einer entkoppelten Montage werden insbesondere die Kräfte zwischen den einzelnen Einheiten minimiert.

Das Design kann insbesondere durch Aufbringen eines Druckes, einer Lackierung, von Folien oder anderen Materialien und/oder durch entsprechende Anordnung der Aussparungen sowie Kombinationen davon beeinflusst werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1 den Querschnitt durch eine erste Ausführungsform eines Klimakanals;
- Fig. 2 die Draufsicht auf den Bodenteil des Klimakanals von Fig. 1 in Blickrichtung y;
- Fig. 3 den Querschnitt durch eine andere Ausführungsform eines Klimakanals.

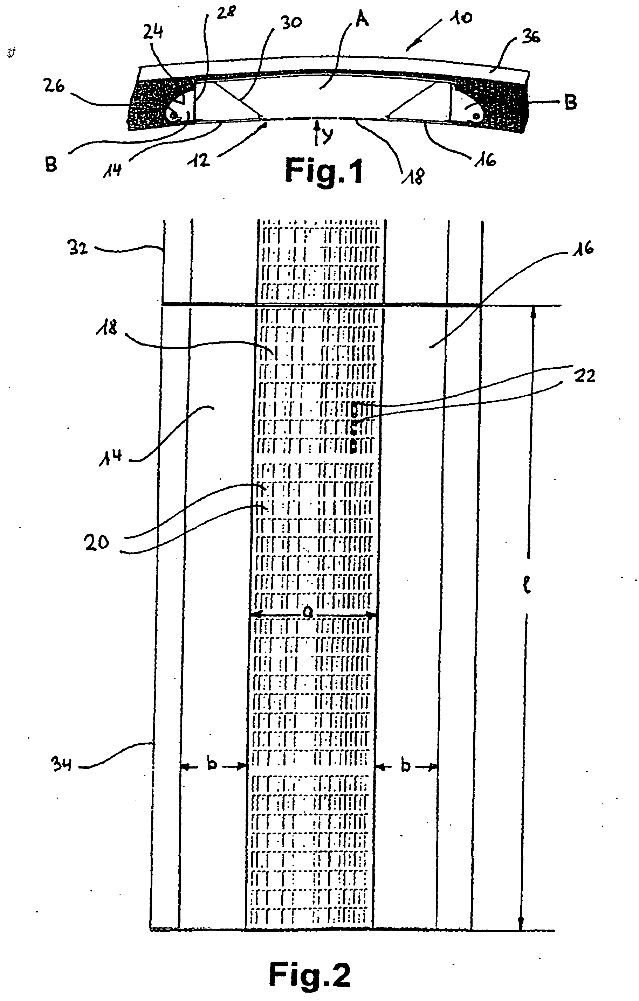

Ein gegen den Fahrgastraum weisender Kanalboden 12 eines Klimakanals 10 weist seitlich angeordnete, lichttransparente Platten 14, 16 auf. Zwischen diesen Platten 14, 16 ist ein mit einer lichttransparenten Kunststoffplatte überzogenes Aluminiumblech 18 angeordnet. Das Aluminiumblech 18 weist Aussparungen 20 für den Lichtdurchtritt auf. Die mit dem Aluminiumblech 18 verbundene Kunststoffplatte ist mit Luftauslassöffnungen 22 versehen, die in Fig. 2 aus Gründen der besseren Übersicht beispielhaft nur im Bereich von drei Aussparungen eingezeichnet sind.

In den seitlichen, zu Reflektoren geformten Kanalwänden 24 sind Leuchtkörper 26 angeordnet.

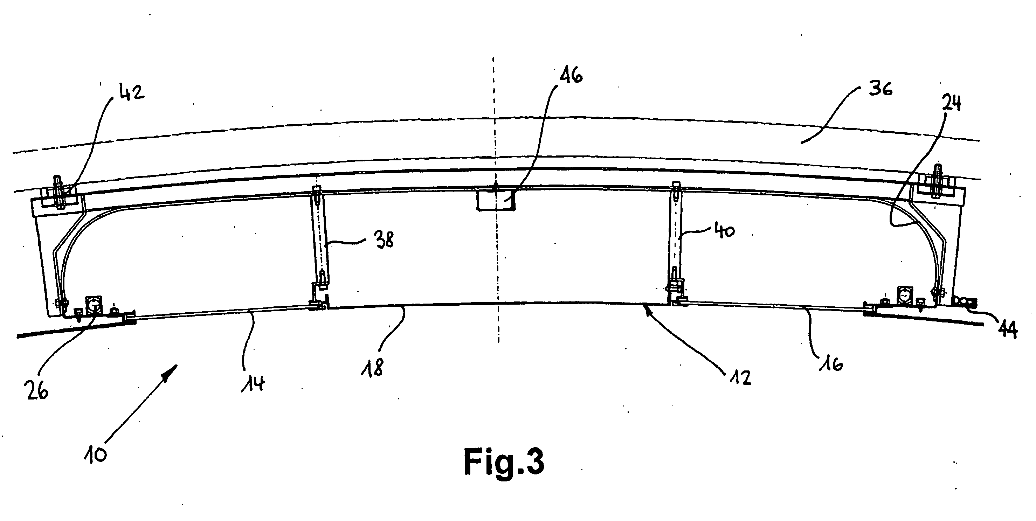

Der Klimakanal 10 von Fig. 1 ist durch zwei Trennwände 28 in einen mittigen Teilkanal A und in zwei seitliche Teilkanäle B unterteilt, welche unterschiedlich genutzt werden können, beispielsweise für den getrennten Transport von Frischluft und Abluft. Das Aluminiumblech 18 wird durch separate Aufhängungen 30 in seiner Lage fixiert. Der Klimakanal 10 ist - in Fig. 1 nicht dargestellt - an der Deckenstruktur 36 festgelegt. Bei der in Fig. 3 dargestellten Variante eines Klimakanals 10 sind spezielle Aufhängungen 38, 40 für die Platten 14, 16 sowie für das Aluminiumblech 18 vorgesehen. Der Klimakanal 10 ist über Schraubverbindungen 42 mit der Deckenstruktur 36 verschraubt.

Ausserhalb des Klimakanals 10 ist ein Kabelkanal 44 angeordnet. Innerhalb des Klimakanals 10 ist eine Brandbekämpfungsanlage 46 installiert.

Wie aus Fig. 2 ersichtlich, ist der Klimakanal 10 aus Einheiten 32, 34 zusammengesetzt. Die Einheiten 32, 34 weisen eine Länge I auf. Die transparenten Platten 14, 16 weisen eine Breite b, das als Mittelteil eingesetzte Aluminiumblech 18 eine Breite a auf.

## Patentansprüche

1. Fahrzeug mit einem Abteil, wenigstens einem an der Decke oder an einer Seitenwand des Abteils in Fahrzeuglängs- oder querrichtung angeordneten Klimakanal (10) und einer Beleuchtungseinrichtung mit Leuchtkörpem (26), wobei der Klimakanal (10) als Reflektorkasten mit einem zumindest teilweise lichtdurchlässigen, gegen das Innere des Abteils gerichteten Kanalboden (12) ausgestaltet ist und die Leuchtkörper (26) der Beleuchtungseinrichtung innerhalb des Klimakanals (10) angeordnet sind,
**dadurch gekennzeichnet, dass**
der Klimakanal (10) durch zwei Trennwände (28) in einen mittigen Teilkanal (A) und in zwei seitliche Teilkanäle (B) mit zu Reflektoren geformten Kanalwänden (24) unterteilt ist und die Leuchtkörper (26) der Beleuchtungseinrichtung innerhalb der seitlichen Teilkanäle (B) angeordnet sind.

2. Fahrzeug nach Anspruch 1, **dadurch gekennzeichnet, dass** die Trennwände (28) aus Glas, aus Metall oder aus einem schwer entflammbaren Kunststoff, insbesondere aus Polycarbonat bestehen.

3. Fahrzeug nach Anspruch 1 oder 2, **dadurch gekennzeichnet, dass** der Kanalboden (12) beidseitig angeordnete, zumindest teilweise lichtdurchlässige längslaufende Bodenteile (18) des Klimakanals (10) mit Luftauslass-oder Luftabsaugöffnungen (22) aufweist und zwischen den seitlich verlaufenden Bodenteilen (18) mittig eine weitere, aus zumindest teilweise lichtdurchlässigem Material bestehende längslaufende Platte (14,16), vorzugsweise Platten aus Glas, aus Metall oder aus einem schwer entflammbaren Kunststoff, insbesondere aus Polycarbonat, angeordnet ist.

4. Fahrzeug nach Ansprüch 1 oder 2, **dadurch gekennzeichnet, dass** der Kanalboden (12) wenigstens eine, aus zumindest teilweise lichtdurchlässigem Material bestehende längslaufende Platte (14,16), vorzugsweise eine oder mehrere Platten aus Glas, aus Metall oder aus einem schwer entflammbaren Kunststoff, insbesondere aus Polycarbonat, vorzugsweise mit Luftauslass- oder Luftabsaugöffnungen (22), aufweist.

5. Fahrzeug nach Ansprüch 1 oder 2, **dadurch gekennzeichnet, dass** der Kanalboden (12) wenigstens einen zumindest teilweise lichtdurchlässigen längslaufenden Bodenteil (18) des Klimakanals (10) mit Luftauslass- oder Luftabsaugöffnungen (22) aufweist.

6. Fahrzeug nach Ansprüch 1 oder 2, **dadurch gekennzeichnet, dass** der Kanalboden (12) beidseitig angeordnete, aus zumindest teilweise lichtdurchlässigem Material bestehende längslaufende Platten (14,16), vorzugsweise Platten aus Glas, aus Metall oder aus einem schwer entflammbaren Kunststoff, insbesondere aus Polycarbonat, aufweist und zwischen den seitlich verlaufenden Platten (14,16) mittig ein weiterer, zumindest teilweise lichtdurchlässiger längslaufender Bodenteil (18) des Klimakanals (10) mit Luftauslass- oder Luftabsaugöffnungen (22) angeordnet ist.

7. Fahrzeug nach Anspruch 6, **dadurch gekennzeichnet, dass** der mittige Bodenteil (18) des Klimakanals (10) eine Platte aus einem mindestens teilweise lichtdurchlässigen Material, vorzugsweise einer Kunststoffplatte, insbesondere eine Platte aus Polycarbonat, oder ein Blech, insbesondere ein Aluminiumblech, mit Durchbrüchen bzw. Aussparungen (20) ist.

8. Fahrzeug nach Anspruch 6, **dadurch gekennzeichnet, dass** die das Blech mit den Durchbrüchen bzw. Aussparungen (20) mit einer die Durchbrüche im Blech abdeckenden, die Luftauslass- oder Luftabsaugöffnungen (22) aufweisenden Kunststoffplatte oder -folie verbunden ist.

9. Fahrzeug nach einem der Ansprüche 1 bis 8, **dadurch gekennzeichnet, dass** der Klimakanal (10) starr oder mittels elastischer Verbindungen entkoppelt an der Decken- oder Seitenwandstruktur befestigt ist.

10. Fahrzeug nach einem der Ansprüche 1 bis 9, **dadurch gekennzeichnet, dass** die Wände des Klimakanals (10) thermisch und/oder akustisch isoliert sind.

11. Fahrzeug nach einem der Ansprüche 1 bis 10, **dadurch gekennzeichnet, dass** der Klimakanal (10) einzeln vormontierte Einheiten (32,34) umfasst.

12. Fahrzeug nach Anspruch 11, **dadurch gekennzeichnet, dass** die vormontierten Einheiten (32,34) starr oder mittels elastischer Verbindungen entkoppelt zueinander montiert sind.

13. Fahrzeug nach einem der Ansprüche 1 bis 12, **dadurch gekennzeichnet, dass** das Fahrzeug ein Schienen- oder Strassenfahrzeug, insbesondere ein Eisenbahnwagen, und das Abteil ein Fahrgastraum ist.

14. Fahrzeug nach einem der Ansprüche 1 bis 13, **dadurch gekennzeichnet, dass** innerhalb oder ausserhalb des Klimakanals (10) eine Brandbekämpfungsanlage (46) installiert ist.

15. Fahrzeug nach einem der Ansprüche 1 bis 14, **dadurch gekennzeichnet, dass** innerhalb oder ausserhalb des Klimakanals (10) ein Kabelkanal (44) angeordnet ist.

## Claims

1. Vehicle comprising a compartment, at least one air-conditioning duct (10) arranged on the ceiling or on a side wall of the compartment in the longitudinal or transverse direction of the vehicle and a lighting system with light fittings (26), the air-conditioning duct (10) being designed as a reflector box and having an at least partially translucent base (12) directed towards the interior of the compartment and the light fittings (26) of the lighting system being arranged inside the air-conditioning duct (10), **characterised in that** the air-conditioning duct (10) is divided by means of two partition walls (28) into a central duct (A) and two lateral ducts (B) having walls (24) in the form of reflectors and the light fittings (26) of the lighting system are arranged inside the lateral ducts (B).

2. Vehicle according to claim 1, **characterised in that** the partition walls (28) consist of glass, metal or a flame-resistant plastic, in particular polycarbonate.

3. Vehicle according to claim 1 or claim 2, **characterised in that** the base (12) of the duct is provided on either side with at least partially translucent longitudinally extending base parts (18) of the air-conditioning duct (10) having air outlets or air vents (22) and another longitudinally extending panel (14, 16) consisting of an least partially translucent material, preferably panels consisting of glass, metal or a flame-resistant plastic, in particular polycarbonate, is arranged centrally between the laterally extending base parts (18).

4. Vehicle according to claim 1 or claim 2, **characterised in that** the base (12) of the duct comprises at least one longitudinally extending panel (14, 16) consisting of an at least partially translucent material, preferably one or more panels consisting of glass, metal or a flame-resistant plastic, in particular polycarbonate, preferably having air outlets or air vents (22).

5. Vehicle according to claim 1 or claim 2, **characterised in that** the base (12) of the duct comprises at least one at least partially translucent longitudinally extending base part (18) of the air-conditioning duct (10) having air outlets or air vents (22).

6. Vehicle according to claim 1 or claim 2, **characterised in that** the base (12) of the duct is provided on either side with longitudinally extending panels (14, 16) consisting of an at least partially translucent material, preferably panels consisting of glass, metal or a flame-resistant plastic, in particular polycarbonate, and another at least partially translucent longitudinally extending base part (18) of the air-conditioning duct (10) having air outlets or air vents (22) is arranged centrally between the laterally extending panels (14, 16).

7. Vehicle according to claim 6, **characterised in that** the central base part (18) of the air-conditioning duct (10) is a panel consisting of an at least partially translucent material, preferably a plastic panel, in particular a panel consisting of polycarbonate, or a sheet, in particular an aluminium sheet, having openings or recesses (20).

8. Vehicle according to claim 6, **characterised in that** the sheet having the openings or recesses (20) is joined to a plastic panel or film having the air outlets or air vents (22) covering the openings in the sheet.

9. Vehicle according to one of claims 1 to 8, **characterised in that** the air-conditioning duct (10) is secured to the ceiling structure or side wall structure rigidly or releasably by means of flexible joints.

10. Vehicle according to one of claims 1 to 9, **characterised in that** the walls of the air-conditioning duct (10) are thermally insulated and/or sound-insulated.

11. Vehicle according to one of claims 1 to 10, **characterised in that** the air-conditioning duct (10) includes individually pre-assembled units (32, 34).

12. Vehicle according to claim 11, **characterised in that** the pre-assembled units (32, 34) are assembled together rigidly or releasably by means of flexible joints.

13. Vehicle according to one of claims 1 to 12, **characterised in that** the vehicle is a rail vehicle or road vehicle, in particular a railway carriage, and the compartment is a passenger compartment.

14. Vehicle according to one of claims 1 to 13, **characterised in that** a fire-fighting unit (46) is installed inside or outside the air-conditioning duct (10).

15. Vehicle according to one of claims 1 to 14, **characterised in that** a cable duct (44) is arranged inside or outside the air-conditioning duct (10).

## Revendications

1. Véhicule comportant un compartiment, au moins un conduit de climatisation (10) agencé dans le sens longitudinal ou transversal du véhicule contre le plafond ou une paroi latérale du compartiment, et un dispositif d'éclairage avec des corps d'éclairage (26), le conduit de climatisation (10) étant conçu sous forme de caisson de réflexion avec un fond (12) au moins partiellement transparent, orienté vers l'intérieur du compartiment, et les corps d'éclairage (26) du dispositif d'éclairage étant agencés à l'intérieur du conduit de climatisation (10), **caractérisé en ce que** le conduit de climatisation (10) est divisé par deux cloisons (28) en un conduit partiel central (A) et en deux conduits partiels latéraux (B) avec des parois (24) conçues sous forme de réflecteurs, et les corps d'éclairage (26) du dispositif d'éclairage sont agencés à l'intérieur des conduits partiels latéraux (B).

2. Véhicule selon la revendication 1, **caractérisé en ce que** les cloisons (28) sont réalisées en verre, en métal ou en matière plastique difficilement inflammable, en particulier en polycarbonate.

3. Véhicule selon la revendication 1 ou 2, **caractérisé en ce que** le fond (12) du conduit comporte des éléments de fond (18) du conduit de climatisation (10), qui s'étendent de part et d'autre dans le sens longitudinal, sont au moins partiellement transparents et sont munis d'orifices de distribution d'air ou d'aspiration d'air (22) et, entre les éléments de fond (18) agencés latéralement, est agencée au milieu une plaque (14, 16) supplémentaire, orientée dans le sens longitudinal et réalisée dans un matériau au moins partiellement transparent, de préférence des plaques en verre, en métal ou en matière plastique difficilement inflammable, en particulier en polycarbonate.

4. Véhicule selon la revendication 1 ou 2, **caractérisé en ce que** le fond (12) du conduit comporte au moins une plaque (14, 16), orientée dans le sens longitudinal et réalisée dans un matériau au moins partiellement transparent, de préférence une ou plusieurs plaques en verre, en métal ou en matière plastique difficilement inflammable, en particulier en polycarbonate, munies de préférence d'orifices de distribution d'air ou d'aspiration d'air (22).

5. Véhicule selon la revendication 1 ou 2, **caractérisé en ce que** le fond (12) du conduit comporte au moins un élément de fond (18) du conduit de climatisation (10), s'étendant dans le sens longitudinal, réalisé en matériau au moins partiellement transparent et muni d'orifices de distribution d'air ou d'aspiration d'air (22).

6. Véhicule selon la revendication 1 ou 2, **caractérisé en ce que** le fond (12) du conduit comporte des plaques (14, 16) qui s'étendent de part et d'autre dans le sens longitudinal, sont réalisées dans un matériau au moins partiellement transparent, de préférence des plaques en verre, en métal ou en matière plastique difficilement inflammable, en particulier en polycarbonate, et, entre les plaques (14, 16) s'étendant latéralement, est agencé au milieu un élément de fond (18) supplémentaire du conduit de climatisation (10), qui est orienté dans le sens longitudinal, est au moins partiellement transparent et est muni d'orifices de distribution d'air ou d'aspiration d'air (22).

7. Véhicule selon la revendication 6, **caractérisé en ce que** l'élément de fond (18) central du conduit de climatisation (10) est une plaque réalisée dans un matériau au moins partiellement transparent, de préférence une plaque en matière plastique, en particulier une plaque en polycarbonate, ou une tôle, en particulier une tôle d'aluminium, avec des trous débouchants ou des évidements (20).

8. Véhicule selon la revendication 6, **caractérisé en ce que** la tôle avec les trous débouchants ou les évidements (20) est assemblée à une plaque ou feuille en matière plastique couvrant les trous débouchants dans la tôle et munie des orifices de distribution d'air ou d'aspiration d'air (22).

9. Véhicule selon l'une quelconque des revendications 1 à 8, **caractérisé en ce que** le conduit de climatisation (10) est fixé contre la structure du plafond ou de la paroi latérale de manière stationnaire ou de manière amovible au moyen d'éléments d'assemblage élastiques.

10. Véhicule selon l'une quelconque des revendications 1 à 9, **caractérisé en ce que** les parois du conduit de climatisation (10) sont isolées thermiquement et/ou acoustiquement.

11. Véhicule selon l'une quelconque des revendications 1 à 10, **caractérisé en ce que** le conduit de climatisation (10) comporte des unités (32, 34) préfabriquées individuellement.

12. Véhicule selon la revendication 11, **caractérisé en ce que** les unités (32, 34) préfabriquées sont montées entre elles de manière stationnaire ou de manière amovible au moyen d'éléments d'assemblage élastiques.

13. Véhicule selon l'une quelconque des revendications 1 à 12 **caractérisé en ce que** le véhicule est un véhicule ferroviaire ou un véhicule routier, en particulier un véhicule de chemin de fer, et le compartiment est un espace voyageurs.

14. Véhicule selon l'une quelconque des revendications 1 à 13, **caractérisé en ce qu'**une installation de lutte contre l'incendie (46) est montée à l'intérieur ou à l'extérieur du conduit de climatisation (10).

15. Véhicule selon l'une quelconque des revendications 1 à 14, **caractérisé en ce qu'**une goulotte pour câbles (44) est agencée à l'intérieur ou à l'extérieur du conduit de climatisation (10).
